**Europäisches Patentamt**

**European Patent Office**

**Office européen des brevets**

(19)

(11) Veröffentlichungsnummer: **0 171 023**

**B1**

(12)

# EUROPÄISCHE PATENTSCHRIFT

(45) Veröffentlichungstag der Patentschrift:
23.11.88

(51) Int. Cl.⁴: **B 23 K 7/10**

(21) Anmeldenummer: **85109552.1**

(22) Anmeldetag: **30.07.85**

(54) **Thermisch belasteter Querträger, insbesondere Querträger für Brennschneidmaschinen.**

(30) Priorität: **08.08.84 DE 3429126**

(43) Veröffentlichungstag der Anmeldung:
**12.02.86 Patentblatt 86/7**

(45) Bekanntmachung des Hinweises auf die Patenterteilung:
**23.11.88 Patentblatt 88/47**

(84) Benannte Vertragsstaaten:
**AT BE CH FR GB IT LI NL SE**

(56) Entgegenhaltungen:
**DD-A-203 261**
**US-A-3 442 499**

(73) Patentinhaber: **MESSER GRIESHEIM GMBH, Hanauer Landstrasse 330, D-6000 Frankfurt/Main 1 (DE)**

(72) Erfinder: **Nicolai, Manfred, Dr., Wienerstrasse 60, D-6100 Darmstadt (DE)**

EP 0 171 023 B1

**0 171 023**

## Beschreibung

Die Erfindung betrifft eine Brennschneidmaschine nach dem Oberbegriff des Anspruchs 1.

Querträger von Brennschneidmaschinen sind den während des Betriebseinsatzes auftretenden Bearbeitungstemperaturen von Brenner und Werkstück ausgesetzt. Diese durch thermische Strahlung, Wärmeleitung und Wärmeübertragung durch Strömung in den Querträger eingebrachten Warmeströme führen zu Verformungen des Querträgers und der an dem Querträger befestigten Querlaufbahnen sowie Wegmeßeinrichtungen.

Es ist zur Verhinderung der Wärmeeinstrahlung in den Quertrager einer Brennschneidmaschine bekannt, vor den der Strahlung ausgesetzten Querträgeroberflachen reflektierende Strahlungsschutzbleche aus beispielsweise poliertem Aluminium anzubringen.

Bedingt durch allgemeine konstruktive Maschinenbauformen können Strahlungsschutzbleche jedoch nur an Teilbereichen des Querträgers angebracht werden. So können durch den geringen Abstand zwischen Brennerhöhenverstellung und Vorderseite des Querträgers und den Bändern zum Quervorschub der Brenner, die Strahlungsschutzbleche im erforderlichen Mindestabstand von 30 Millimeter nur an der Unterseite des Trägers befestigt werden.

Aus der DE-AS-1 254 224 ist eine Vorrichtung zur Kompensation der Temperaturdifferenz bekannt geworden, bei der der gemessene Wert der Verschiebung als Führungsgröße in einem elektrischen Nachlaufregelkreis zur Korrektur der Verschiebung dient.

Derartige Kompensationsvorrichtungen erfordern jedoch einen hohen meßtechnischen Aufwand zur Erfassung der Ist-Temperatur-Werte sowie zur Nachregelung der Abweichungen.

Aus der gattungsgemäßen US-A-3 442 499 ist es bekannt, ausgehend von einem Gebläse einen Luftstrom in einem geschlossenen Rohr entlang der Rückseite des Querträgers bis zu einer dem Gebläse gegenüberliegenden Stirnseite zu transportieren, von der es durch den gesamten Querträger zur Kühleinrichtung zurückgeführt wird. Durch diese Strömungsführung der Luft wird die Vor- und Rückseite des Querträgers gleichmäßig gekühlt. Mit dieser gleichmäßigen Kühlung bleibt die Temperaturdifferenz zwischen der brennertragenden Vorderseite und der Rückseite erhalten, so daß mit dieser Kühleinrichtung Krümmungen des Querträgers nicht vermieden werden können. Um Längungen des Querträgers bei dieser Strömungsführung zu vermeiden, muß eine große Luftmenge durch den Querträger strömen. Dies führt zu einer kostenungünstigen und große Baumaße aufweisenden Kühleinrichtung, deren Antrieb selbst große Wärme erzeugt.

Der Erfindung liegt die Aufgabe zugrunde, die thermischen Verformungen an dem Querträger einer Brennschneidmaschine zu verringern.

Diese Aufgabe wird bei einer gattungsgemäßen Brennschneidmaschine durch die kennezeichnenden Merkmale des Anspruchs 1 gelöst.

Um eine solche Kühleinrichtung einfach und gewichtsarm ausbilden zu können, wird an dem Kühlkanal ein Luftgebläse angeschlossen, mit welchem dem Kühlkanal ein Luftstrom zuführbar ist.

Durch die Ausbildung des Kühlkanals innerhalb des Hohlprofils wird das Luftdurchsatzvolumen verringert und durch ideale Strömungsführung die Wärmeabführ erhöht.

Die mit der Erfindung erzielten Vorteile bestehen insbesondere darin, daß sich der Querträger und somit die an dem Träger befestigten Querlaufbahnen und die Zahnstangen des Querantriebs des Brenners nur noch in vernachlässigbaren Größenordnungen krümmen und verlängern. Da die Zahnstange des Querantriebs auch als Wegmeßelement dient, wird die Wegmessung in Querrichtung genauer. Ein Verkanten von insbesondere doppelseitig angetriebenen Maschinen durch eine Krümmung der Querträger wird in einfacher Art und Weise verhindert.

Ein Ausführungsbeispiel der Erfindung ist in der Zeichnung dargestellt und wird im folgenden näher beschrieben.

Es zeigen:

Fig. 1   eine vereinfachte perspektivische Darstellung einer Brennschneidmaschine mit einem Werkzeugträger;

Fig. 2   die Einzelheit A der Fig. 1 in vergrößerter Darstellung;

Fig. 3   einen Schnitt B-B des Trägers nach der Erfindung.

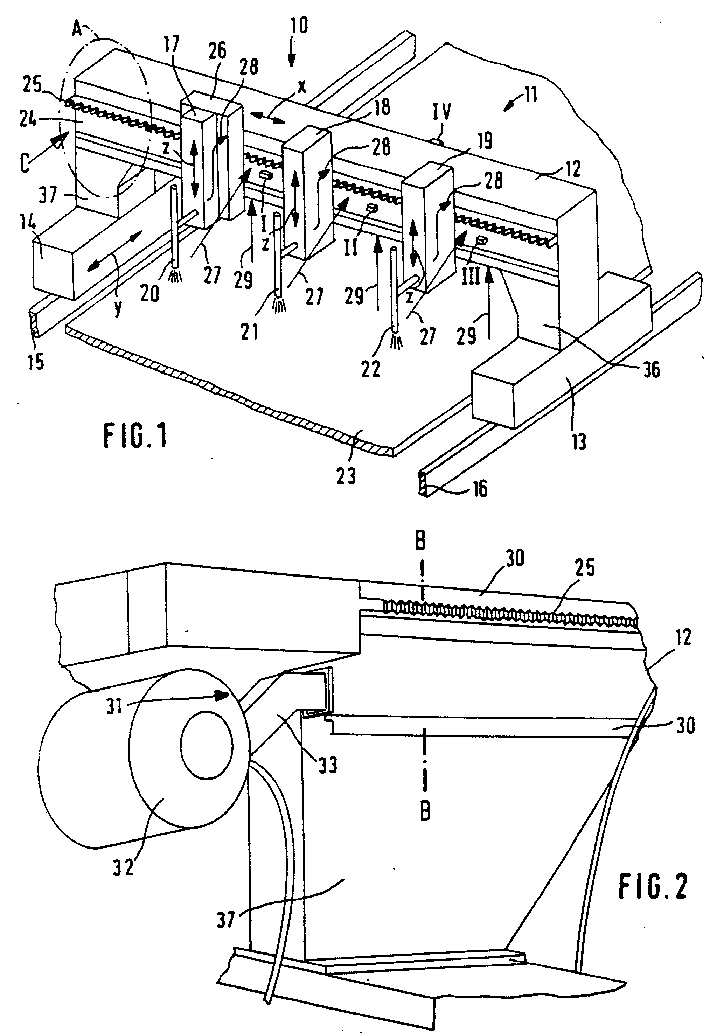

In Fig. 1 ist schematisch eine Brennschneidmaschine 10 dargestellt, die im wesentlichen aus einem Laufwagen 11, der einen Querträger 12 sowie Unterwagen 13 und 14 aufweist, besteht. Im Unterwagen 14 befinden sich die vollständigen Antriebsaggregate für die Längsbewegung (Pfeilrichtung y). Die Unterwagen 13 und 14 sind auf Laufschienen 15 und 16 in Pfeilrichtung y verfahrbar. Am Querträger 12 sind ferner Brenneraufhängungen 17, 18, 19 vorgesehen. Die Brenneraufhängungen 17, 18, 19 stehen mit einem endlos umlaufenden Stahlband 24 zum Bewegen der Brenneraufhängungen 17, 18, 19 in Pfeilrichtung x in Verbindung. Das Stahlband 24 wird über ein, im Querantriebswagen 26 angeordnetes Ritzel, das in die Zahnstange 25 eingreift, gezogen. In der Fig. 1 sind lediglich drei Brenneraufhängungen 17, 18, 19 schematisch dargestellt. Selbstverständlich ist es auch möglich, mehr als drei bzw. nur eine Brenneraufhängung 17, 18, 19 an der Brennschneidmaschine 10 anzuordnen. An den Brenneraufhängungen 17, 18, 19 ist jeweils ein Schneidbrenner 20, 21, 22 (beispielsweise Autogenschweißbrenner, Plasmaschneidbrenner oder dergl.) angeordnet, die über

2

eine nicht näher dargestellte Hubeinrichtung in Pfeilrichtung z höhenverstellbar sind.

Die Schneidbrenner 20, 21, 22 werden über das auf einem nicht naher dargestellten Werkstücktisch liegende Werkstück 23 numerisch nach Lochband oder fotoelektrisch nach Unterlagen gesteuert.

Die zulässigen Abweichungen vom Nennmaß des ausgeschnittenen Werkstückes 23 sind in DIN 2310, Blatt 3 "Thermisches Schneiden Autogenes Brennschneiden, Verfahrensgrundlagen, Güte, Maßabweichungen" festgelegt (Tabelle 1). Um diese Genauigkeitsanforderungen erfüllen zu können, müssen sich die Schneidbrenner 20, 21, 22 in allen Betriebszustanden exakt an den von der Steuerung definierten Positionen befinden. Da einerseits die numerische Steuerungstechnik immer genauere Positionssollwerte vorgeben kann, andererseits seitens der Anwender eine Rationalisierung durch größere Schnittgeschwindigkeiten und höhere Schneidbrennerzahl 20, 21, 22 gefordert wird, müssen die Positionen der Schneidbrenner 20, 21, 22 unabhangig von thermischen Störgrößen sein.

**Tabelle 1:** Zulässige Abweichnungen vom Nennmaß (Maße in mm) nach DIN 2310

| Genauig-keitsgrad | Werkstück-dicke | Nennmaßbereich | | | |
|---|---|---|---|---|---|
| | | 35 bis unter 315 | 315 bis unter 1000 | 1000 bis unter 2000 | 2000 bis unter 4000 |
| A | 3 bis 50 | ± 0,5 | ± 1,0 | ± 1,5 | ± 2,0 |
| | über 50 bis 100 | ± 1,0 | ± 2,0 | ± 2,5 | ± 3,0 |
| B | 3 bis 50 | ± 1,5 | ± 2,5 | ± 3,0 | ± 3,5 |
| | über 50 bis 100 | ± 2,5 | ± 3,5 | ± 4,0 | ± 4,5 |

In Fig. 1 sind die drei Wärmeübertragungsarten durch die Pfeile 27, 28, 29 symbolisch dargestellt. Die Pfeile 27 stellen hierbei die Wärmeeinstrahlungen, die Pfeile 28 die Wärmeleitungen und die Pfeile 29 die durch Strömung in den Querträger 12 eingebrachte Wärme dar.

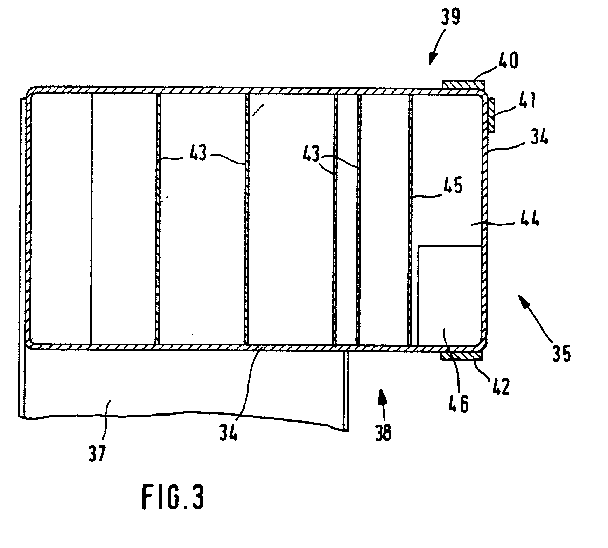

In Fig. 2 ist eine Einzelheit A der Fig. 1 aus der Ansicht C dargestellt. An dem Querträger 12 der Brennschneidmaschine 10 sind Querlaufbahnen 30 und die Zahnstange 25 montiert. In der Praxis vorgenommene Messungen ergaben eine Ausdehnung der Quertrager 12 und der Querlaufbahnen 30 sowie der Zahnstangen 25 von ca. 2 Millimeter. Zur Verbesserung der Wärmeabfuhr und somit zur Verringerung der Wärmeausdehnung des Querträgers 12 wurde der Brennschneidmaschine 10 vorzugsweise eine Einrichtung 31 zur Luftkühlung zugeordnet. Dabei erzeugt ein Radiallüfter 32 einen Luftstrom, der über ein abgewinkeltes Einblasrohr 33 in den Querträger 12 geführt wird und diesen durchströmt. Vorteilhaft ist der Lüfter 32 an eine Drehzahlregeleinrichtung angeschlossen, mit der der Volumenstrom entsprechend dem Trägerquerschnitt regelbar ist.

Fig. 3 zeigt einen Querschnitt (B-B) durch den in verwindungssteifer, geschweißter Leichtbaukonstruktion ausgebildeten Querträger 12. Der Querträger besteht im wesentlichen aus einem rechteckförmigen Hohlprofil 34, das über Vertikaltraversen 36, 37 mit den Unterwagen 13, 14 verbunden ist. Die werkzeugtragende Vorderseite 35 des Hohlprofiles 34 kragt über die Vertikaltraversen 36, 37. An der Vorderseite 35 sowie an der Unterseite 38 und der Oberseite 39 des Hohlprofiles 34 sind Montageplatten 40, 41, 42 befestigt, die als Halterungen für die Zahnstange 25 und die Querlaufbahnen 30 dienen. Innerhalb des Hohlprofiles 34 sind Versteifungsbleche 43 zur Erhöhung der statischen und dynamischen Eigenschaften des Querträgers 12 vorgesehen. In dem der Vorderseite 35 zugewandten Bereich des Querträgers 12 ist ein Kühlkanal 44 durch das vorzugsweise Einschweißen eines Trennbleches 45 über die gesamte Länge des Querträgers 12 ausgebildet. Die vorgesehenen Aussparungen für den Anschluß des Einblasrohres 33 bzw. für den Luftaustritt in den Stirnflächen sind mit 46 bezeichnet.

Die Einrichtung 31 zur Kühlung der Brennschneidmaschine 10 arbeitet im oben beschriebenen Fall als Durchlaufkühlung, d. h. der Luftstrom tritt an der einen Seite des Querträgers 12 ein und entweicht an der anderen Seite in die Umgebung. Selbstverständlich ist es auch möglich, die durch den Querträger 12 geführte Luft über einen Wärmetauscher zur Einblasseite des Trägers 12 zurückzuführen. Weitere Vorteile ergeben sich durch das Anbringen von Luftleitblechen innerhalb des Kühlkanals 44 sowie durch Ansaugen von gekühlter Luft.

Mit der Einrichtung nach der Erfindung wurden die in Tabelle 2 (Verzugsmessung ohne Kühleinrichtung) angegebenen Verzugsmessungen an den Meßpunkten I, II, III, IV (Fig. 1) entsprechend den in Tabelle 3 angegebenen Meßwerten verringert.

Bei den Messungen wurde die Brennschneidmaschine 10 aus kaltem Zustand (Raumtemperatur) heraus aufgeheizt. Die Schneidbrenner 20, 21, 22 wurden - ohne zu schneiden - mit Brenngas und Heizsauerstoff betrieben. Die Flammen trafen auf ein 8 mm starkes Blech und wurden von Hand nachgeregelt.

Alle 10 min bis zum Versuchsende nach 110 min wurden an allen Meßstellen Verzüge und Temperaturen aufgenommen. Die Versuchsdauer reichte aus, um einen stationären Erwärmungszustand herzustellen.

**0 171 023**

**Tabelle 2**

Verzugsmessungen an Brennschneidmaschinen

| Versuchs-dauer (min) | Verzug an Meßstelle (mm) | | | |
|---|---|---|---|---|
| | I | II | III | IV |
| 0 | 0 | 0 | 0 | 0 |
| 10 | + 0,23 | + 0,27 | -0,06 | -0,08 |
| 20 | 0,93 | 0,96 | 0,10 | 0,12 |
| 30 | 1,29 | 1,34 | 0,10 | 0,12 |
| 40 | 1,66 | 1,74 | 0,10 | 0,13 |
| 50 | 1,93 | 2,06 | 0,10 | 0,14 |
| 60 | 2,08 | 2,26 | 0,10 | 0,14 |
| 70 | 2,12 | 2,32 | 0,10 | 0,14 |
| 80 | 2,22 | 2,42 | 0,11 | 0,15 |
| 90 | 2,14 | 2,37 | 0,11 | 0,15 |
| 100 | 2,21 | 2,41 | 0,08 | 0,13 |
| 110 | 2,12 | 2,36 | 0,07 | 0,11 |

**Tabelle 3**

Verzugsmessungen an Brennschneidmaschinen

| Versuchs-dauer (min) | Verzug an Meßstelle (mm) | | | |
|---|---|---|---|---|
| | I | II | III | IV |
| 0 | 0 | 0 | 0 | 0 |
| 10 | +0,29 | +0,31 | -0,06 | -0,10 |
| 20 | 0,41 | 0,48 | 0,07 | 0,12 |
| 30 | 0,43 | 0,55 | 0,07 | 0,13 |
| 40 | 0,41 | 0,58 | 0,07 | 0,13 |
| 50 | 0,34 | 0,54 | 0,07 | 0,14 |
| 60 | 0,26 | 0,50 | 0,07 | 0,13 |
| 70 | 0,17 | 0,48 | 0,07 | 0,13 |
| 80 | 0 | 0,35 | 0,07 | 0,14 |
| 90 | 0 | 0,34 | 0,07 | 0,13 |
| 100 | 0 | 0,34 | 0,06 | 0,07 |
| 110 | 0 | 0,34 | 0,06 | 0,07 |

Selbstverständlich ist es auch möglich, anstatt einer Luftkühlung einen Kühlkanal 44 für eine Wasserkühlung vorzusehen. Hierbei ergibt sich der Vorteil, daß Wasser eine höhere Wärmekapazität und einen höheren Wärmeübergangskoeffizienten besitzt. Dabei kann bei einer geringeren Erwärmung des Kühlmediums ein größerer Wärmestrom abgeführt werden.

**Patentansprüche**

1. Brennschneidmaschine mit einem Querträger, an dessen Vorderseite mindestens eine Querlaufbahn für die Führung von Brennern angeordnet ist und wobei der Querträger als Hohlprofil ausgebildet ist, durch welches ein Gas und/oder eine Flüssigkeit zum Kühlen des Querträgers strömt, dadurch gekennzeichnet, daß durch Mittel (45) die innerhalb des Hohlprofils (34) eingesetzt sind, ein sich über die gesamte Länge der brennertragenden Vorderseite (35) des Querträgers (12) erstreckender Kühlkanal (44) gebildet wird, so daß das Gas und/oder die Flüssigkeit im wesentlichen nur entlang der Vorderseite des Querträgers (12) geführt wird.

2. Brennschneidmaschine nach Anspruch 1, dadurch gekennzeichnet, daß an den Kühlkanal (44) ein Luftgebläse (32), vorzugsweise ein Radiallüfter, angeschlossen ist.

3. Träger nach Anspruch 2, dadurch gekennzeichnet, daß die angesaugte Luft gekühlt ist.

4. Brennschneidmaschine nach einem der Ansprüche 1 bis 3, dadurch gekennzeichnet, daß die Luft an der dem Luftgebläse (32) gegenüberliegenden Seite aus dem Querträger (12) in die

4

**0 171 023**

Umgebung entweicht.

5. Brennschneidmaschine nach einem der Ansprüche 1 bis 3,
dadurch gekennzeichnet,
daß die Luft von der dem Luftgebläse (32) gegenüberliegenden Seite zu der Einblasseite zurückgeführt wird.

6. Brennschneidmaschine nach Anspruch 1,
dadurch gekennzeichnet,
daß an den Kühlkanal (44) eine Wasserpumpe angeschlossen ist, mit welcher dem Träger ein Wasserstrom zuführbar ist.


## Claims

1. Flame cutting machine having a transverse beam on whose front side at least one transverse track for the guidance of the torches is arranged and wherein the transverse beam is designed as a hollow profile through which a gas and/or a liquid flows for cooling the transverse beam, characterized in that a cooling channel (44) extending over the entire length of the torch-carrying front side (35) of the transverse beam (12) is formed by means (45) which are inserted inside the hollow profile (34), so that the gas and/or the liquid is essentially conducted only along the front side of the transverse beam (12).

2. Flame cutting machine according to Claim 1, characterized in that an air blower (32), preferably a radial fan, is connected to the cooling channel (44).

3. Beam according to claim 2, characterized in that the drawn-in air is cooled.

4. Flame cutting machine according to any of Claims 1 to 3, characterized in that the air escapes from the transverse beam (12) into the environment at the side opposite the air blower (32).

5. Flame cutting machine according to any of Claims 1 to 3, characterized in that the air is returned to the blowing side from the side opposite the air blower (32).

6. Flame cutting machine according to Claim 1, characterized in that connected to the cooling channel (44) is a water pump with which a stream of water can be supplied to the beam.


## Revendications

1. Machine d'oxycoupage comportant un support transversal dont la face avant comporte au moins un chemin transversal pour guider les chalumeaux et dont le support transversal est en forme de profil creux, traversé par un gaz et/ou un liquide pour refroidir le support transversal, machine caractérisée par des moyens (45) logés dans le profil creux (34) qui forment un canal de refroidissement (44) s'étendant sur toute la longueur de la face avant (35) du support transversal (12), face avant portant les chalumeaux de manière que le gaz et/ou le liquide ne soit guidé principalement que le long de la face avant du support transversal (12).

2. Machine d'oxycoupage selon la revendication 1, caractérisée par une machine soufflante (32) d'air, de préférence un ventilateur radial qui est relié au canal de refroidissement (44).

3. Support selon la revendication 2, caractérisé en ce que l'air aspiré est de l'air refroidi.

4. Machine d'oxycoupage selon l'une des revendications 1 à 3, caractérisée en ce que l'air s'échappe à l'environnement par le côté du support transversal (12) opposé à celui de la machine soufflante (32).

5. Machine d'oxycoupage selon l'une des revendications 1 à 3, caractérisée en ce que l'air est renvoyé du côté opposé à la machine soufflante d'air (32) jusque du côté de l'entrée d'air.

6. Machine d'oxycoupage selon la revendication 1, caractérisée par une pompe à eau reliée au canal de refroidissement (44) et qui fournit un courant d'eau au support.

5

FIG.1

FIG.2

FIG.3